# FASCICULE DE BREVET EUROPEEN

(11) **EP 2 625 740 B1**
(45) Date de publication et mention de la délivrance du brevet: **03.12.2014**
(21) Numéro de dépôt: 11779798.5
(22) Date de dépôt: 05.10.2011
(51) Int. Cl.: H01M 10/613, H01M 10/625, H01M 10/652, H01M 10/6561, B60H 1/00, H01M 10/6563, H01M 10/663

(54) **COMPARTIMENT A BATTERIES POUR UN VEHICULE**
BATTERIEFACH FÜR EIN FAHRZEUG
BATTERY COMPARTMENT FOR A VEHICLE

(30) Priorité: 07.10.2010 FR 1058136
(43) Date de publication de la demande: 14.08.2013
(73) Titulaire: Renault S.A.S., 92100 Boulogne-Billancourt (FR)
(72) Inventeur: COLIBERT, Lionel, F-27400 Montaure (FR); DELVALLEE, Sylvain, F-76520 Franqueville Saint Pierre (FR); ESTIENNE, Jérôme, F-92130 Issy Les Moulineaux (FR)
(86) Numéro de dépôt international: PCT/FR2011/052321
(87) Numéro de publication internationale: WO 2012/045978

(56) Documents cités:
- EP-A2- 1 750 322
- DE-A1-102008 010 821
- FR-A1- 2 946 802
- JP-A- 2003 331 932
- US-A- 6 094 927
- US-A1- 2009 191 452

## Description

L'invention concerne l'alimentation d'un véhicule pourvu d'une chaine de traction électrique et plus précisément d'un compartiment à batteries servant à l'alimentation en énergie électrique de cette chaine.

Les véhicules pourvus d'une chaine de traction électrique puisent leur énergie électrique dans des batteries. Lors de la libération et le stockage de cette énergie électrique, hors ou dans les batteries, s'en suit un processus chimique exothermique, élevant la température des modules de batteries. Or, le fonctionnement de ces derniers est très sensible à la température, qui doit alors être maintenue autour d'une température cible dans une plage déterminée de fonctionnement. On évite ainsi une diminution des performances de la batterie, par exemple une perte de capacité, si la température est trop basse, ou une dégradation de la durée de vie, si la température est trop élevée.

Il existe, donc, un besoin de maintenir les modules de batterie à une température, aussi proche que possible de la température cible. En outre, les compartiments de batterie peuvent comporter un nombre important de modules ou un nombre de modules différent d'un empilement à l'autre. Par conséquent, il existe également un besoin de réduire, autant que possible, le gradient de température entre les modules, pour éviter qu'un ou plusieurs modules ne subissent des conditions de fonctionnement plus sévères que les autres modules, ce qui réduirait les performances et/ou la durée de vie de celle-ci.

Le document de brevet FR2876223 propose un compartiment de batterie recevant un flux d'air par une entrée du compartiment et qui circule vers une sortie afin de refroidir des modules de batterie par convection forcée. Les modules à refroidir sont agencés de sorte à former au moins un couloir entre les rangées d'empilements de modules, allant de l'entrée à la sortie du compartiment, la largeur de ce couloir diminuant le long du sens d'écoulement pour former un V. L'air circule donc le long de ce couloir et entre les modules grâce à la présence de déflecteurs détournant une partie du flux circulant dans ce couloir. La réduction progressive de la largeur de ce couloir permet d'accélérer le flux du fluide à mesure que celui-ci circule dans le compartiment, et ainsi d'augmenter la capacité d'échange thermique entre les modules situés vers la sortie et le flux d'air qui est réchauffé par les modules situés au voisinage de l'entrée du fluide. Un tel système ne permet toutefois pas une homogénéisation satisfaisante du refroidissement des modules dans le compartiment.

Le document de brevet EP1750322 divulgue un module de batterie, dans lequel un diviseur est installé dans le passage du flux de refroidissement pour diviser ledit passage en une pluralité de passages pour des sous-flux de refroidissement.

Le document de brevet JP2003331932 divulgue un système de batterie comportant une pluralité de modules disposés avec des passages pour des flux de refroidissement entre chacun d'eux. Les passages sont plus larges aux extrémités du module qu'en sa partie centrale.

Un but de la présente invention est de proposer un compartiment de batteries amélioré, obviant notamment tout ou partie des inconvénients précités pour refroidir uniformément tous les modules d'un compartiment à batterie, autour d'une température cible, dans une plage déterminée de température de fonctionnement.

A cette fin, l'invention propose un compartiment à batteries d'un véhicule à motorisation électrique selon l'objet de la revendication 1, comportant sur une première paroi, une entrée d'un fluide de refroidissement et au moins une sortie de ce fluide sur une deuxième paroi, ledit compartiment contenant des empilements de modules de batterie conformés selon au moins une rangée le long d'un couloir principal d'écoulement du fluide admis, chaque empilement de modules le long du couloir principal étant séparé du suivant par un couloir secondaire de largeur variable de manière à obtenir un débit du fluide sensiblement constant dans chacun des couloirs secondaires.

Un tel compartiment permet une circulation du fluide de flux sensiblement constant entre chaque empilement de modules ce qui a pour effet de les refroidir de manière homogène résultant en une amélioration des performances et en une augmentation de la durée de vie de la batterie.

Selon d'autres caractéristiques avantageuses de l'invention :
- la largeur des iemes couloirs secondaires peut varier en fonction de la distance Di ;
- qui sépare l'intersection du ieme couloir secondaire et du couloir principal avec l'entrée du fluide, ce qui permet d'obtenir une distribution homogène du fluide entre les couloirs secondaires et d'obtenir un refroidissement homogène, particulièrement pour des compartiments de grande longueur ; même si cette caractéristique ne fait pas partie de l'invention revendiquée, elle est particulièrement utile à la compréhension de l'invention ;
   - la largeur des ièmes couloirs secondaires peut être égale à un coefficient a prédéterminé multiplié par la distance Di à laquelle on ajoute une largeur L0 représentant le zéroième couloir secondaire situé entre la paroi du compartiment dans laquelle est formée l'entrée de fluide et le premier empilement.
- la largeur des ièmes couloirs secondaires peut varier en fonction du nombre de modules présents dans les empilements situés autour de ce couloir, ce qui permet d'obtenir une distribution homogène du fluide entre les couloirs secondaires et d'obtenir un refroidissement homogène, particulièrement pour des compartiments dans lesquels le nombre de modules dans les empilements varie, et par conséquent la quantité de chaleur à extraire; même si cette caractéristique ne fait pas partie de l'invention revendiquée, elle est particulièrement utile à la compréhension de l'invention ;
- la largeur des ièmes couloirs secondaires peut être égale à un coefficient b prédéterminé multiplié par le nombre Ni de modules dans les empilements bordant ce ième couloir secondaire 30i à laquelle on ajoute une largeur L0 du zéroième couloir secondaire situé entre la paroi du compartiment dans laquelle est formée l'entrée de fluide et le premier empilement.
- la largeur des couloirs secondaires peut diminuer le long d'un axe transversal T entre une première extrémité située à l'intersection du ième couloir secondaire et du couloir principal jusqu'à une deuxième extrémité de sorte à provoquer une accélération du fluide y circulant, ce qui permet d'assurer un refroidissement homogène des parois des modules donnant sur ce couloir, particulièrement dans le cas où les couloirs secondaires présentent une longueur importante.
- le compartiment peut comporter une rangée unique d'empilements, le couloir principal étant situé entre la rangée d'empilements et une des parois latérales du compartiment reliant la première et la deuxième paroi, ce qui permet de concevoir des compartiments très compacts avec une grande homogénéité du refroidissement.
- le compartiment peut comporter au moins deux rangées d'empilements et au moins un couloir principal situé entre ces deux rangées.
- le couloir principal peut s'étendre sensiblement le long de l'axe longitudinal passant par l'entrée, ce qui permet de symétriser les flux de fluide de refroidissement circulant entre les empilements de modules.
- la largeur d'un couloir principal peut diminuer sur sa longueur s'étendant entre l'entrée du fluide et la sortie de sorte à provoquer une accélération du fluide y circulant, ce qui permet d'assurer un refroidissement homogène des parois des modules donnant sur ce couloir, particulièrement dans le cas où le couloir principal présente une longueur importante
- au moins une sortie peut être située sur un axe longitudinal distinct de l'axe longitudinal L passant par l'entrée 7 du fluide, ce qui permet de favoriser une circulation du fluide de refroidissement dans une direction transversale T et d'augmenter la tendance du fluide de refroidissement à emprunter les couloirs secondaires, augmentant ainsi l'efficacité et l'homogénéité du refroidissement

Cette invention concerne également un véhicule électrique équipé de ce compartiment et l'utilisation de ce compartiment pour un véhicule électrique.

L'invention sera mieux comprise à la lecture de la description détaillée d'un mode de réalisation pris à titre non limitatif et illustré par les dessins annexés sur lesquels :
- La figure 1 est une vue en perspective de dessus d'un compartiment à batteries selon l'invention,
- La figure 2 est une vue en section dans le plan [L-V] de ce même compartiment,
- La figure 3 est une vue en section dans le plan [L-V] d'un module composé de 4 cellules élémentaires,
- La figure 4 est une vue de dessus d'un compartiment ouvert détaillant l'agencement et la répartition des empilements de modules dans le compartiment.

Dans la description qui va suivre, il sera adopté à titre non limitatif, une orientation longitudinale, verticale et transversale selon le trièdre direct L, V, T représenté sur les figures.

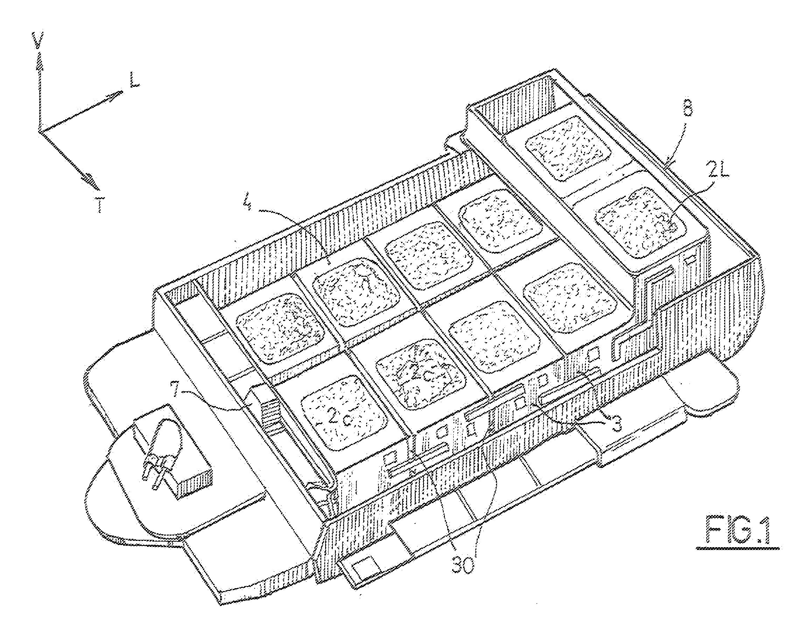

Sur la figure 1 est illustré, dans une vue en perspective de dessus, un compartiment à batterie 1 destiné à alimenter un véhicule pourvu d'une chaine de traction électrique, tel qu'un véhicule électrique ou un véhicule hybride (non représenté). Ce compartiment 1 comporte deux rangées d'empilements s'étendant selon un axe longitudinal L, comportant des empilements courts 2C, et des empilements longs 2L, et formant un couloir principal 20 d'écoulement d'un fluide de refroidissement, tel que de l'air.

On adoptera comme orientation de cet axe longitudinal L, la direction d'écoulement du flux du fluide dans ce couloir principal 20. Le couloir principal 20 relie une entrée de fluide 7 à une sortie de fluide 8, formées dans le boitier du compartiment 1. L'entrée du fluide 7 est adaptée à être connectée à un dispositif de ventilation, par exemple un dispositif de ventilation et de climatisation de véhicule automobile (« HVAC » en anglais), afin de recevoir un flux de fluide de refroidissement. La sortie de fluide 8 peut être connectée à un dispositif d'extraction de fluide afin d'aspirer le flux de fluide hors du compartiment.

Chaque empilement 2C, 2L est composé d'une superposition de modules 3 s'étendant selon l'axe vertical V, et maintenus les uns contre les autres par des plaques de compression 4. Les modules 3 formant les empilements 2 sont reliés électriquement les uns aux autres afin de former une batterie.

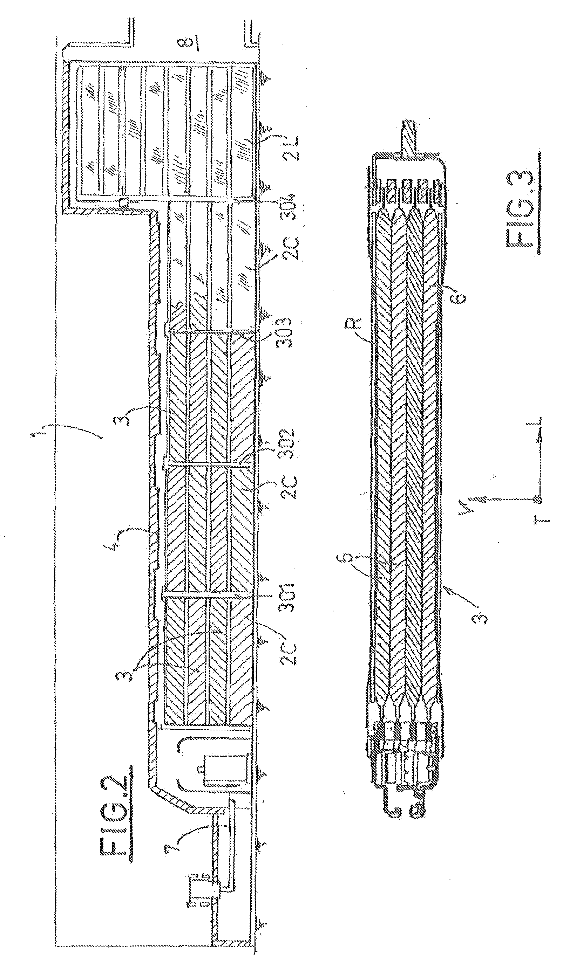

Comme illustré à la figure 2 détaillant une section dans le plan [L-V] du compartiment 1, le compartiment 1 comporte deux types d'empilements, des empilements courts 2C comportant quatre modules 3 superposés, et des empilements longs 2L comportant huit modules 3 superposés. Le compartiment 1 comporte dix empilements 2C, 2L : deux empilements longs 2L placés de part et d'autre du couloir principal 20, à l'extrémité du compartiment située au voisinage de la sortie du fluide 8, et huit empilements courts 2C placés de part et d'autre le long du couloir principal 20, entre l'entrée du fluide 7 et les empilements long 2L.

D'autres agencements des modules dans les empilements, en nombre notamment peuvent bien entendu être envisagés, suivant les contraintes d'encombrement et les performances telles que la puissance ou la tension électrique, requises.

En figure 3 est illustré selon une section dans le plan [L-V], un module 3 qui est composé de cellules élémentaires 6 maintenues et connectées électriquement les unes aux autres dans un réceptacle R. Les cellules élémentaires 6 sont le siège des réactions chimiques exothermiques qui produisent la chaleur qui doit être évacuée hors de la batterie lors des cycles de charge et de décharge. Afin d'obtenir une densité d'énergie élevée, ces cellules 6 sont plaquées les unes contre les autres, la chaleur étant transférée d'une cellule 6 à l'autre par conduction de proche en proche jusqu'à atteindre la paroi du réceptacle R. Les parois du réceptacle R reçoivent ainsi la chaleur émise par les cellules élémentaires 6, celle-ci étant alors évacuée principalement par convection. La chaleur est par exemple évacuée par circulation d'un fluide de refroidissement sur la paroi, tel que l'air.

Le nombre de cellules élémentaires 6 peut varier en fonction des caractéristiques de la batterie souhaitée, et peut être égal à quatre comme représenté sur la figure 3.

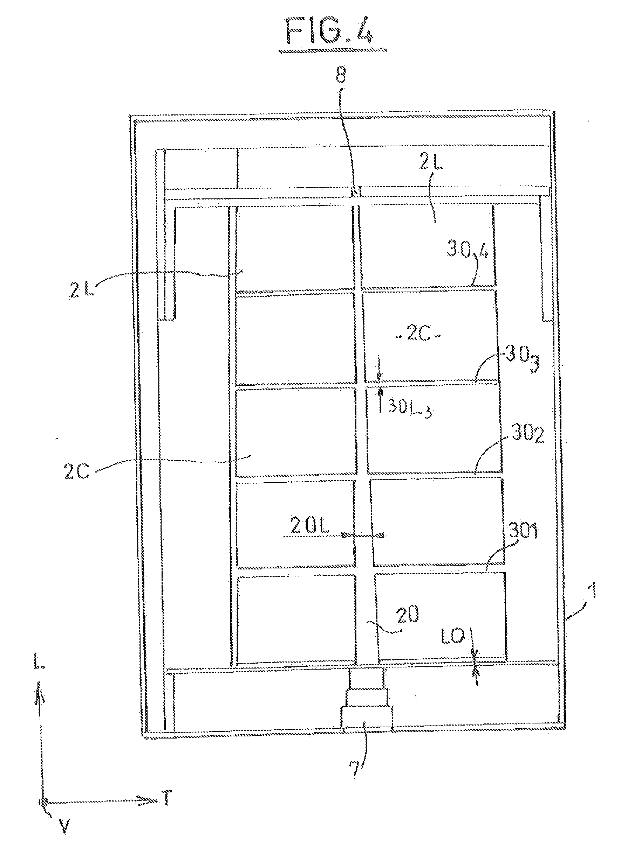

La figure 4 détaille un agencement particulier des empilements 2C, 2L de modules 3 selon l'invention par une vue de dessus du compartiment 1 ouvert permettant un refroidissement des modules 3 amélioré.

Le fluide de refroidissement s'écoule depuis l'entrée 7 de fluide vers la sortie 8 du fluide, formé dans le boitier du compartiment 1, par le couloir principal 20, refroidissant ainsi les parois des modules 3 exposée au couloir principal 20. Le trajet du fluide étant relativement long dans le compartiment 1 pour rejoindre la sortie 8, celui-ci peut perdre de son pouvoir d'extraction de chaleur pour les empilements 2C, 2L de modules 3, situés vers cette sortie 8. C'est pourquoi, la largeur 20L du couloir principal 20 varie le long de ce trajet de sorte à accélérer la vitesse du flux de fluide d'aval en amont. La largeur 20L diminue donc à mesure que l'on approche de la sortie 8. Le couloir principal 20, forme ainsi un V dans le plan [L-T], lorsqu'il est vu de dessus.

Des couloirs dits « secondaires » 30, s'étendant selon une direction transversale T sont formés entre les empilements 2C, 2L de modules 3. Le fluide peut alors circuler sur au moins une autre des parois des modules 3, qui présente une surface plus importante que les parois exposées au couloir principal 20.

Lors de son parcours le long du couloir principal 20, une portion du fluide s'engage dans les couloirs secondaires 30.

Selon l'invention, la largeur 30L des couloirs secondaires 30 est variable le long du couloir principal 20.

Selon un premier mode de réalisation, la largeur 30L des couloirs secondaires 30 est plus grande vers la sortie 8 de fluide du compartiment 1. Ainsi, la largeur 30Li de l'ième couloir secondaire 30i est fonction de la distance Di séparant l'intersection de cet ième couloir secondaire 30i et du couloir principal 20 avec l'entrée 7 du fluide du compartiment 1. Ainsi, à mesure que cette distance Di augmente, la largeur 30Li du ième couloir secondaire 30 augmente.

La largeur 30Li de ces couloirs secondaires 30 est telle qu'elle est égale à un coefficient a multiplié par la distance Di à laquelle on ajoute une largeur L0 du zéroième couloir secondaire situé entre la paroi du compartiment dans laquelle est formée l'entrée 7 de fluide et le premier empilement 2C, 2L.

Les constantes a et L0 sont prédéterminées lors de la conception, par exemple en adaptant ces constantes pour que les mesures de flux dans chacun des couloirs secondaires soient sensiblement égales.

Selon un deuxième mode de réalisation, particulièrement adapté à des compartiments de batterie 1 dans lequel les dimensions des empilements varient, la largeur 30L des couloirs secondaires varie en fonction du nombre de modules 3 de l'empilement 2C, 2L. Plus précisément, dans le mode de réalisation présenté aux figures 2 et 3, la largeur 30L du couloir secondaire 30 séparant des empilements longs 2L et des empilements courts 2C consécutifs est encore plus importante que la largeur 30L des couloirs secondaires 30 séparant deux empilements courts 2C consécutifs. Ainsi, le flux de fluide de refroidissement est adapté à la quantité de chaleur produite par les empilements 2C, 2L de module 3 qui est plus élevée à mesure que le nombre de modules 3 par empilement 2C, 2L augmente.

Soit Ni le nombre de modules 3 présents dans les ièmes empilements 2C,2L, la largeur 30Li de ces couloirs secondaires 30i est telle qu'elle est égale à un coefficient b multiplié par le nombre Ni de modules 3 dans les empilements bordant ce ième couloir secondaire 30i à laquelle on ajoute une largeur L0 du zéroième couloir secondaire situé entre la paroi du compartiment dans laquelle est formée l'entrée 7 de fluide et le premier empilement 2C,2L.

Les constantes b et L0 sont prédéterminés lors de la conception, par exemple en adaptant ces constantes pour que les mesures de flux dans chacun des couloirs secondaires soient sensiblement égales.

Selon un troisième mode de réalisation, la largeur 30L des couloirs secondaires 30 varie à la fois de la manière dont elle varie dans le premier mode de réalisation et à la fois de la manière dont elle varie dans le deuxième mode de réalisation.

En variante (non représentée), la largeur 30 L des couloirs secondaires 30, peut varier le long de l'axe transversal T de façon analogue à la réduction de largeur 20L du couloir principal 20 le long de l'axe longitudinal L, de sorte à accélérer le flux du fluide de refroidissement dans le couloir secondaire 30. Le couloir secondaire 30, forme ainsi un V dans le plan [L-V], lorsqu'il est vu de dessus. Cette diminution de largeur 30L peut s'opérer linéairement entre une première extrémité située à l'intersection du couloir secondaire 30 et du couloir principal 20 jusqu'à sa deuxième extrémité. Cette variante augmente l'efficacité du refroidissement lorsque les couloirs secondaires 30 sont longs.

Bien que décrite en relation avec un compartiment intégrant deux rangées d'empilements 2C, 2L, l'invention trouve également application à un compartiment intégrant une seule rangée.

Le compartiment 1 comporte alors une unique rangée d'empilement 2C, 2L, le couloir principal 20 s'étendant alors suivant un axe sensiblement longitudinal L entre la dite rangée et une paroi latérale du compartiment 1 reliant les premier et deuxième côtés dans lesquels sont formés respectivement l'entrée 7 et la sortie 8 de fluide.

Bien entendu, l'invention s'applique également à un compartiment présentant au moins trois rangées d'empilement 2C, 2L séparés par au moins deux couloirs principaux 20.
Adapté aux compartiments de grandes dimensions cela permet une plus grande capacité de circulation de fluide.

Selon une autre variante (non représentée), le compartiment peut comporter au moins une deuxième sortie de fluide. De préférence, ces sorties ne sont pas formées sur l'axe longitudinal L passant par l'entrée de fluide. Ainsi, le fluide admis circulant dans le couloir principal se heurte à l'extrémité de celui-ci à une paroi du compartiment. En plaçant les deux sorties de fluide au voisinage des extrémités aval des couloirs secondaires, alors on favorise une circulation du fluide de refroidissement dans une direction transversale T. Par conséquent, on augmente la tendance du fluide de refroidissement à emprunter les couloirs secondaires, augmentant ainsi l'efficacité et l'homogénéité du refroidissement.

Toutes ces implantations permettent d'obtenir un débit du fluide le plus homogène possible entre les rangées d'empilement de modules.

## Revendications

1. Compartiment à batteries (1) d'un véhicule à motorisation électrique comportant sur une première paroi, une entrée (7) d'un fluide de refroidissement et au moins une sortie (8) de ce fluide sur une deuxième paroi, ledit compartiment (1) contenant des empilements (2C,2L) de modules (3) de batterie conformés selon au moins une rangée le long d'un couloir principal (20) d'écoulement du fluide admis, chaque empilement (2C,2L) de modules (3) le long du couloir principal (20) étant séparé du suivant par un couloir secondaire (30) **caractérisé en ce que** la largeur (30L) dudit couloir secondaire est variable et égale à a.D+L où a est un coefficient, où D est la distance qui sépare l'intersection entre ledit couloir secondaire et le couloir principal de l'entrée (7) du fluide et où L est la largeur du couloir secondaire situé entre la paroi du compartiment dans laquelle est formée l'entrée (7) de fluide et le premier empilement, de manière à obtenir un débit du fluide sensiblement constant dans chacun des couloirs secondaires (30).

2. Compartiment à batteries (1) d'un véhicule à motorisation électrique, selon la revendication 1, **caractérisé en ce que** la largeur (30L) des couloirs secondaires (30) diminue le long d'un axe transversal (T) entre une première extrémité située à l'intersection du couloir secondaire (30) et du couloir principal (20) jusqu'à une deuxième extrémité de sorte à provoquer une accélération du fluide y circulant.

3. Compartiment à batteries (1) d'un véhicule à motorisation électrique, selon l'une quelconque des revendications précédentes, **caractérisé en ce qu'**il comporte une rangée unique, le couloir principal (20) étant situé entre la rangée d'empilements (2) et une des parois latérales du compartiment (1) reliant la première et la deuxième paroi.

4. Compartiment à batteries (1) d'un véhicule à motorisation électrique, selon l'une quelconque des revendications 1 ou 2, **caractérisé en ce qu'**il comporte au moins deux rangées d'empilements (2C,2L) et au moins un couloir principal (20) situé entre ces deux rangées.

5. Compartiment à batteries (1) d'un véhicule à motorisation électrique, selon l'une quelconque des revendications précédentes, **caractérisé en ce que** le couloir principal (20) s'étend sensiblement le long de l'axe longitudinal (L) passant par l'entrée (7).

6. Compartiment à batteries (1) d'un véhicule à motorisation électrique, selon l'une des revendications précédentes, **caractérisé en ce que** la largeur (20L) du couloir principal (20) diminue sur sa longueur s'étendant entre l'entrée du fluide (7) et la sortie (8) de sorte à provoquer une accélération du fluide y circulant.

7. Compartiment à batteries (1) d'un véhicule à motorisation électrique, selon l'une quelconque des revendications précédentes, **caractérisé en ce qu'**au moins une sortie (8) est située sur un axe longitudinal distinct de l'axe longitudinal (L), passant par l'entrée du fluide (7).

8. Véhicule automobile à chaine de traction électrique **caractérisé en ce qu'**il comporte un compartiment à batterie selon l'une quelconque des revendications précédentes.

## Patentansprüche

1. Batteriefach (1) eines Fahrzeugs mit Elektroantrieb, das an einer ersten Wand einen Eingang (7) für ein Kühlfluid und mindestens einen Ausgang (8) dieses Fluids an einer zweiten Wand aufweist, wobei das Fach (1) Stapel (2C, 2L) von Batteriemodulen (3) enthält, die gemäß mindestens einer Reihe entlang eines Hauptströmungskanals (20) des eingelassenen Fluids ausgebildet sind, wobei jeder Stapel (2C, 2L) von Modulen (3) entlang des Hauptkanals (20) vom folgenden durch einen Sekundärkanal (30) getrennt ist, **dadurch gekennzeichnet, dass** die Breite (30L) des Sekundärkanals variabel und gleich a.D+L ist, wobei a ein Koeffizient, D der den Schnittpunkt zwischen dem Sekundärkanal und dem Hauptkanal vom Eingang (7) des Fluids trennende Abstand und L die Breite des Sekundärkanals ist, der sich zwischen der Wand des Fachs, in der der Fluideingang (7) geformt ist, und dem ersten Stapel befindet, um in jedem der Sekundärkanäle (30) einen im Wesentlichen konstanten Fluiddurchsatz zu erhalten.

2. Batteriefach (1) eines Fahrzeugs mit Elektroantrieb nach Anspruch 1, **dadurch gekennzeichnet, dass** die Breite (30L) der Sekundärkanäle (30) entlang einer Querachse (T) zwischen einem am Schnittpunkt des Sekundärkanals (30) und des Hauptkanals (20) befindlichen ersten Ende bis zu einem zweiten Ende abnimmt, um eine Beschleunigung des dort zirkulierenden Fluids zu bewirken.

3. Batteriefach (1) eines Fahrzeugs mit Elektroantrieb nach einem der vorhergehenden Ansprüche, **dadurch gekennzeichnet, dass** es eine einzige Reihe aufweist, wobei der Hauptkanal (20) sich zwischen der Reihe von Stapeln (2) und einer der Seitenwände des Fachs (1) befindet, die die erste und die zweite Wand verbinden.

4. Batteriefach (1) eines Fahrzeugs mit Elektroantrieb nach einem der Ansprüche 1 oder 2, **dadurch gekennzeichnet, dass** es mindestens zwei Reihen von Stapeln (2C, 2L) und mindestens einen Hauptkanal (20) aufweist, der sich zwischen diesen zwei Reihen befindet.

5. Batteriefach (1) eines Fahrzeugs mit Elektroantrieb nach einem der vorhergehenden Ansprüche, **dadurch gekennzeichnet, dass** der Hauptkanal (20) sich im Wesentlichen entlang der durch den Eingang (7) verlaufenden Längsachse (L) erstreckt.

6. Batteriefach (1) eines Fahrzeugs mit Elektroantrieb nach einem der vorhergehenden Ansprüche, **dadurch gekennzeichnet, dass** die Breite (20L) des Hauptkanals (20) über seine Länge abnimmt, die sich zwischen dem Fluideingang (7) und dem Ausgang (8) erstreckt, um eine Beschleunigung des dort fließenden Fluids zu bewirken.

7. Batteriefach (1) eines Fahrzeugs mit Elektroantrieb nach einem der vorhergehenden Ansprüche, **dadurch gekennzeichnet, dass** mindestens ein Ausgang (8) sich auf einer anderen Längsachse als der durch den Fluideingang (7) verlaufenden Längsachse (L) befindet.

8. Kraftfahrzeug mit elektrischem Antriebsstrang, **dadurch gekennzeichnet, dass** es ein Batteriefach nach einem der vorhergehenden Ansprüche aufweist.

## Claims

1. Battery compartment (1) for an electric vehicle comprising an inlet (7) for a cooling fluid on a first wall and at least one outlet (8) for this fluid on a second wall, said compartment (1) containing stacks (2C, 2L) of battery modules (3) configured in at least one row along a main corridor (20) of flow of the admitted fluid, each stack (2C, 2L) of modules (3) along the main corridor (20) being separated from the next by a secondary corridor (30), **characterized in that** the width (30L) of said secondary corridor is variable and equal to a.D+L, where a is a coefficient, where D is the distance which separates the intersection between said secondary corridor and the main corridor of the fluid inlet (7) and where L is the width of the secondary corridor situated between the wall of the compartment in which the fluid inlet (7) is formed and the first stack, so as to obtain a fluid flow rate that is substantially constant in each of the secondary corridors (30).

2. Battery compartment (1) for an electric vehicle according to Claim 1, **characterized in that** the width (30L) of the secondary corridors (30) decreases along a transversal axis (T) between a first end situated at the intersection of the secondary corridor (30) and of the main corridor (20) and a second end so as to provoke an acceleration of the fluid circulating therein.

3. Battery compartment (1) for an electric vehicle according to either one of the preceding claims, **characterized in that** it comprises a single row, the main corridor (20) being situated between the row of stacks (2) and one of the lateral walls of the compartment (1) linking the first and the second wall.

4. Battery compartment (1) for an electric vehicle according to either one of Claims 1 and 2, **characterized in that** it comprises at least two rows of stacks (2C, 2L) and at least one main corridor (20) situated between these two rows.

5. Battery compartment (1) for an electric vehicle according to any one of the preceding claims, **characterized in that** the main corridor (20) extends substantially along the longitudinal axis (L) passing through the inlet (7).

6. Battery compartment (1) for an electric vehicle according to any one of the preceding claims, **characterized in that** the width (20L) of the main corridor (20) decreases over its length, extending between the fluid inlet (7) and the outlet (8) so as to provoke an acceleration of the fluid circulating therein.

7. Battery compartment (1) for an electric vehicle according to any one of the preceding claims, **characterized in that** at least one outlet (8) is situated on a longitudinal axis distinct from the longitudinal axis (L) passing through the fluid inlet (7).

8. Motor vehicle with electric drive train, **characterized in that** it comprises a battery compartment according to any one of the preceding claims.
